# FASCICULE DE BREVET EUROPEEN

(11) **EP 1 188 639 B1**
(45) Date de publication et mention de la délivrance du brevet: **19.01.2005**
(21) Numéro de dépôt: 01402369.1
(22) Date de dépôt: 14.09.2001
(51) Int. Cl.: B62D 1/184, B62D 1/10

(54) **Dispositif de direction de véhicule automobile**
Kraftfahrzeuglenkeinrichtung
Motor vehicle steering device

(30) Priorité: 18.09.2000 FR 0011894
(43) Date de publication de la demande: 20.03.2002
(73) Titulaire: Renault s.a.s., 92100 Boulogne Billancourt (FR)
(72) Inventeur: Gallinato-Contino, Roland, 83780 Flayosc (FR)

(56) Documents cités:
- EP-A- 0 983 925
- DE-A- 3 241 575
- FR-A- 2 720 709
- PATENT ABSTRACTS OF JAPAN vol. 016, no. 391 (M-1298), 19 août 1992 (1992-08-19) & JP 04 129857 A (MITSUBISHI MOTORS CORP), 30 avril 1992 (1992-04-30)

## Description

La présente invention concerne un dispositif de direction de véhicule automobile.

L'invention concerne plus particulièrement un dispositif de direction de véhicule automobile qui comporte une colonne de direction tubulaire longitudinale dans laquelle est monté à rotation un arbre de direction. Un volant de direction est lié en rotation à l'extrémité supérieure libre de l'arbre de direction.

Le volant comporte généralement une jante annulaire qui est reliée, par des branches d'orientation sensiblement radiale, à un moyeu de volant qui est lui-même lié en rotation à l'extrémité supérieure libre de l'arbre de direction.

Selon une conception connue, un tel dispositif de direction peut comporter un bloc central qui est monté au centre du volant et qui est fixe en rotation par rapport à la colonne de direction, c'est-à-dire qu'il ne tourne pas avec le volant.

Un exemple d'un tel agencement d'un bloc central de commandes fixe en rotation est décrit et représenté dans le document FR-A-2.720.709.

Cet agencement immobile en rotation du bloc, tout en permettant un entraînement en rotation de l'arbre de direction par le volant, est obtenu par un mécanisme à engrenages qui est intégré à l'intérieur de la colonne de direction.

De façon à adapter le poste de conduite à la morphologie de chaque conducteur, un tel dispositif de direction peut comporter un dispositif de réglage de la position de la colonne de direction dans un plan médian vertical de direction longitudinale. Pour ce faire, il comporte un dispositif de verrouillage et de déverrouillage de sa position par rapport à la structure du véhicule. Le dispositif de verrouillage et de déverrouillage est actionné de façon connue par un organe de commande qui est monté mobile par rapport à la colonne de direction.

L'organe de verrouillage et de déverrouillage est généralement agencé sous la colonne de direction. Ainsi, pour régler la position du volant, le conducteur du véhicule qui est assis doit se pencher en avant pour accéder à l'organe mobile et pour déverrouiller le dispositif de réglage. La position du conducteur ne correspond pas à sa position de conduite, il doit alors revenir en arrière poser les deux mains sur le volant pour ajuster correctement la position de la colonne de direction et du volant. Il doit ensuite maintenir le volant de façon à conserver sa position, puis se pencher à nouveau en avant et tendre un bras pour manoeuvrer l'organe mobile et verrouiller à nouveau le dispositif de réglage.

Ce mode opératoire est long et compliqué et ainsi, il est fréquent que l'utilisateur n'effectue pas le réglage de la position de la colonne de direction, même lorsque cèlle-ci ne correspond pas à sa morphologie.

De plus, l'agencement de l'organe de commande sous la colonne de direction ne permet pas de le mettre en évidence. Ainsi, l'attention du conducteur n'est pas attirée sur la présence du dispositif de réglage, ce qui ne l'incite pas à l'utiliser.

En conséquence, bien que de nombreux véhicules soient équipés d'un dispositif de réglage de la position de la colonne de direction, leur utilisation n'est pas systématique. Ainsi, le manque d'ergonomie provoqué par le mauvais positionnement du volant augmente la fatigue du conducteur et, de ce fait, augmente le risque d'accident.

L'invention a pour objet de proposer un dispositif de direction qui permet de remédier aux inconvénients qui viennent d'être évoqués.

Dans ce but, l'invention propose un dispositif de direction de véhicule automobile du type comportant une colonne de direction tubulaire longitudinale, un arbre de direction monté tournant à l'intérieur de la colonne de direction, un volant de direction lié en rotation à l'extrémité supérieure libre de l'arbre de direction, un bloc monté au centre du volant et fixe en rotation par rapport à la colonne de direction, par l'intermédiaire d'un support tubulaire ou virole coaxial à l'arbre de direction, et du type comportant un dispositif de réglage de la position de la colonne de direction, dans un plan vertical de direction longitudinale, qui comporte un dispositif de verrouillage et de déverrouillage de sa position qui est actionné par un organe de commande monté mobile entre une position de verrouillage et une position de déverrouillage du dispositif de réglage de la position de la colonne de direction, caractérisé en ce que l'organe de commande est monté dans le bloc fixe.

Selon d'autres caractéristiques de l'invention :
- l'organe de commande est un levier qui est monté articulé à l'une de ses extrémités libres, entre la position de verrouillage et la position de déverrouillage ;
- l'axe d'articulation du levier est d'orientation sensiblement transversale ;
- des moyens de translation sont interposés entre l'organe de commande et le dispositif de verrouillage et de déverrouillage de façon à transmettre le mouvement de l'organe de commande au dispositif de verrouillage et de déverrouillage ;
- les moyens de translation traversent radialement le support tubulaire ;
- les moyens de translation comportent au moins un levier basculeur articulé dont chaque extrémité est en contact avec les moyens de translation et le dispositif de verrouillage et de déverrouillage respectivement ;
- l'axe d'articulation du levier basculeur est d'orientation sensiblement transversale ;
- les moyens de translation comportent un tube dans lequel est agencée une série de billes adjacentes de diamètre complémentaire au diamètre intérieur du tube qui sont guidées en translation, dans lequel chaque bille d'extrémité de la série coopère avec l'organe de commande et le dispositif de verrouillage et de déverrouillage respectivement ;
- le dispositif de verrouillage et de déverrouillage comporte au moins une came articulée à une première extrémité, entre une position de verrouillage, et une position de déverrouillage qui verrouille et déverrouille respectivement le dispositif de réglage, et en position de verrouillage la seconde extrémité libre de la came appuie transversalement sur le dispositif de réglage de façon à verrouiller sa position ;
- le dispositif de réglage comporte au moins une première et une seconde jambes de réglage, sensiblement perpendiculaires entre elles, qui sont parallèles au plan médian et dont chaque jambe comporte une première extrémité qui est montée pivotante autour d'un axe transversal différent, les secondes extrémités des jambes sont juxtaposées et comportent des moyens de guidage d'un élément de liaison solidaire de la colonne de direction, et les deux secondes extrémités de chaque jambe sont pincées entre au moins une came et une buté lorsque le dispositif de verrouillage et de déverrouillage est en position de verrouillage, de façon à immobiliser l'élément de liaison ;
- les moyens de guidage de chaque seconde extrémité libre comporte une boutonnière oblongue d'orientation radiale par rapport à l'axe transversal de rotation de la première extrémité respective, et l'élément de liaison comporte un axe qui est mobile en translation radiale dans chaque évidement oblong lorsque le dispositif déverrouillage et de déverrouillage est en position de déverrouillage ;
- le dispositif de verrouillage et de déverrouillage comporte deux paires de première et de deuxième cames qui sont articulées autour d'un premier et d'un second axe respectivement, parallèles entre eux, et qui sont d'orientation opposée, et au moins une paire de jambes de réglage est agencée de chaque côté du dispositif de verrouillage et de déverrouillage de façon qu'en position de verrouillage, les secondes extrémités des cames de chaque paire de cames et deux butées pincent les secondes extrémités d'au moins deux jambes de réglage en vis-à-vis, de façon à immobiliser l'élément de liaison.

D'autres caractéristiques et avantages de l'invention apparaîtront à la lecture de la description détaillée qui suit pour la compréhension de laquelle on se reportera aux dessins annexés dans lesquels :
- la figure 1 est une vue en section longitudinale partielle d'un dispositif de direction de véhicule automobile, selon l'invention, dans une première position ;
- la figure 2 est une vue similaire à celle représentée à la figure précédente, le dispositif de direction du véhicule automobile étant dans une seconde position ;
- la figure 3 est une vue en section selon la ligne 3-3 de la figure 1 ;
- la figure 4 est une vue en section partielle selon la ligne 4-4 de la figure 3 le dispositif de réglage du dispositif de direction étant dans une position verrouillée ;
- la figure 5 représente en détail une partie de la vue représentée à la figure 4 ;
- la figure 6 est une vue similaire à cette représentée à la figure 4, le dispositif de réglage étant dans une position déverrouillée ;
- la figure 7 représente en détail une partie de la vue représentée à la figure 6 ;
- la figure 8 est une vue en section longitudinale partielle d'un dispositif de direction de véhicule automobile, selon une variante de l'invention ;
- la figure 9 est une vue en section partielle similaire à celle représentée à la figure 4 du dispositif de direction de véhicule automobile, selon la variante de l'invention.

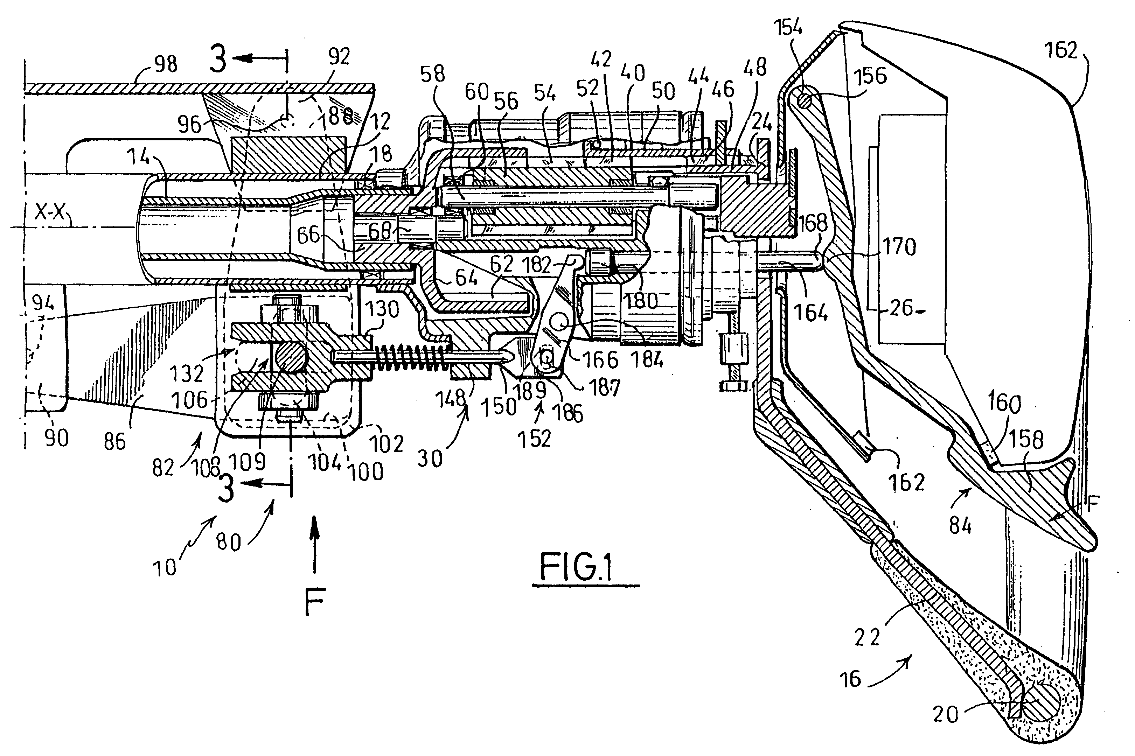

Afin de faciliter la compréhension de la description, une orientation avant, arrière sera utilisée, à titre non limitatif, en référence à une orientation de gauche à droite conformément à la figure 1.

La figure 1 représente un dispositif 10 de direction de véhicule automobile. Le dispositif 10 de direction comporte principalement une colonne de direction 12 de forme générale tubulaire d'orientation générale d'axe X-X

Dans la suite de la description on utilisera, à titre non limitatif, une orientation longitudinale conformément à l'orientation de l'axe X-X.

Le dispositif de direction 10 du véhicule comporte ici une symétrie par rapport un plan médian vertical P de direction longitudinal. Le plan médian P correspond au plan de la section de la figure 1.

Dans la suite de la description, on utilisera, à titre non limitatif, une orientation longitudinale conformément à l'orientation de l'axe X-X.

Un arbre de direction 14 est monté tournant dans la colonne de direction 12. Il permet de transmettre le mouvement de rotation d'un volant 16 à un dispositif d'orientation des roues du véhicule, non représenté.

Seuls les tronçons d'extrémité arrière libre de la colonne 12 et de l'arbre 14 de direction sont représentés sur les figures. Un roulement supérieur 18 interposé entre ces deux composants permet le guidage en rotation ainsi que le positionnement longitudinal de l'arbre de direction 14 et de la colonne 12.

Le volant 16 est constitué pour l'essentiel par une jante 20 de forme générale annulaire qui est reliée par des branches 22 (dont une seule est représentée à la figure 1) à un moyeu de volant 24.

Un bloc fixe 26 est agencé au centre du volant 16; c'est-à-dire à l'intérieur de la jante 20 entre les branches 22. Le bloc 26 est immobile en rotation autour de l'axe X-X, c'est-à-dire qu'il ne tourne pas avec le volant 16.

Le bloc fixe 26 est raccordé par des moyens non représentés à la colonne 12 de direction.

Une virole 28, aussi appelée support tubulaire, est fixée par exemple par un montage serré ou par soudage sur l'extrémité libre de la colonne 12 de direction. Elle protège un dispositif 30 de transmission du mouvement de rotation du volant 16 à l'arbre 18 de rotation.

Nous allons désormais décrire un exemple de réalisation d'un dispositif 30 de type connu.

Le tronçon arrière de la virole 28 reçoit un manchon denté 40, libre en rotation, qui comporte à son extrémité longitudinale avant, une série de dents 42 et, à son extrémité longitudinale arrière opposée, une autre série de dents 44. Les séries de dents 42 et 44 sont séparées par un tronçon cylindrique concave et lisse de la paroi interne du manchon denté 40.

Ainsi, des dents 46 réparties sur la périphérie externe d'un pignon 48 du moyeu de volant 24 perrnettent l'engrènement des dents 44 du manchon denté 40. Le manchon denté 40 est ainsi entraîné une rotation par le volant 16.

Le pignon de moyeu 48 est réalisé venu de matière en une seule pièce avec le moyeu 24 du volant 16 à partir duquel il se prolonge longitudinalement en direction de la colonne de direction 12.

La paroi cylindrique externe 50 du manchon denté 40 est montée à rotation par rapport à la virole 28 par interposition de roulements 52 par exemple à billes ou à aiguilles. Selon une variante une bague de frottement de type autolubrifiée peut aussi être interposée.

La rotation du manchon denté 40 permet d'entraîner en rotation des dents correspondantes 54 d'un pignon 56.

Le pignon 56 comporte un axe 58 monté à rotation par l'intermédiaire de roulements 60 interposés entre l'axe 58 et des paliers réalisés dans un élément intermédiaire de maintien et de guidage 70.

Ainsi, excepté son mouvement de rotation longitudinal, l'axe 58 est immobile par rapport à la colonne 12 de direction.

Le pignon 56 présente un diamètre qui est petit par rapport au diamètre de la virole 28. En effet, son diamètre correspond ici sensiblement au quart du diamètre la virole 28.

Le tronçon avant des dents 54 engrène avec des dents 62 qui sont réparties sur la surface intérieure d'une coupelle 64 qui est solidaire de l'arbre de rotation 18.

La coupelle 64 est fixée à l'arbre de rotation 18 par exemple par frettage d'une partie 66 de forme cylindrique s'étendant longitudinalement vers l'avant à l'intérieur du tronçon arrière creux de l'arbre de rotation 18.

De plus, un élément 68 cylindrique immobilisé dans un élément intermédiaire de maintien et de guidage 70 qui est fixe par rapport à la colonne de direction 12, permet de guider en rotation la partie avant 66 de la coupelle 64.

Le mouvement de rotation du volant 16 est transmis à l'arbre de rotation 18 par l'intermédiaire du manchon denté 40 et du pignon 56.

Le bloc fixe 26 est relié à la colonne de direction 12 notamment par l'élément intermédiaire de maintien et de guidage 70.

Un dispositif 80 de réglage est agencé à proximité de l'extrémité arrière de la colonne direction 12. Il permet au conducteur de régler la position du volant, dans un plan vertical de direction longitudinale, en fonction de sa morphologie de façon à conduire le véhicule dans une position optimale qui permet de réduire la fatigue et par conséquent d'augmenter la sécurité.

Le dispositif 80 de réglage comporte un dispositif 82 de verrouillage et de déverrouillage qui permet de bloquer ou de libérer le mouvement de la colonne direction dans le plan vertical de direction longitudinale.

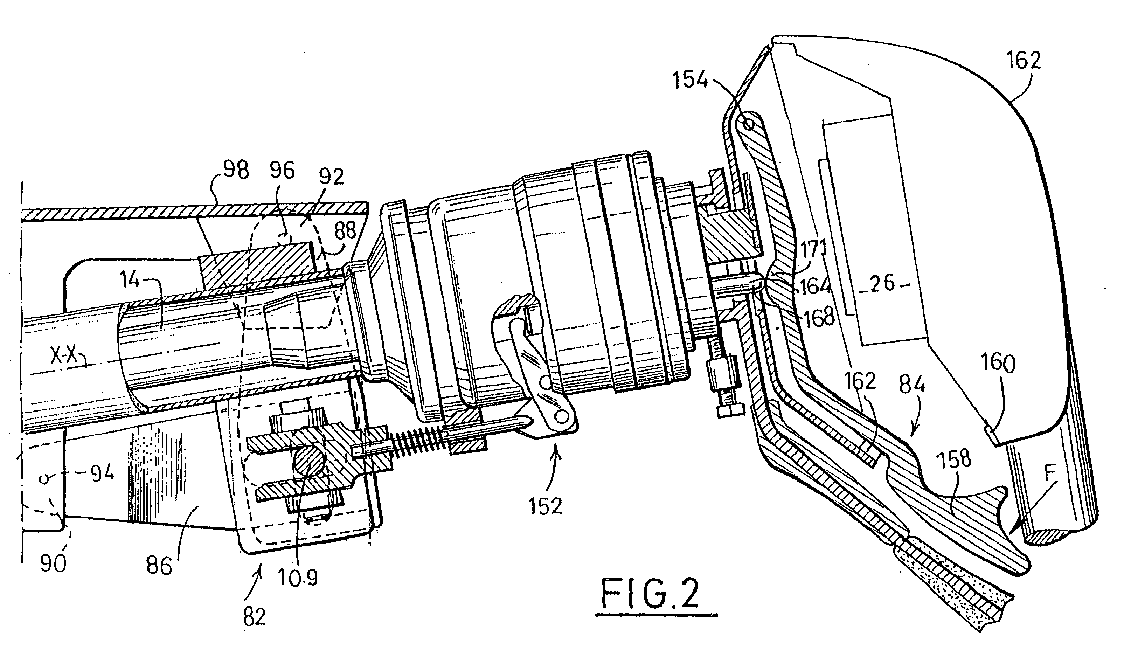

Selon l'invention, le dispositif 82 de verrouillage et de déverrouillage est actionné par un organe de commande 84 qui est monté mobile entre une position de verrouillage qui est représentée à la figure 1 et une position de déverrouillage qui est représentée à la figure 2, l'organe de commande 84 étant monté dans le bloc fixe 26.

Le dispositif 80 de réglage comporte une paire de premières jambes de réglage 86 et une paire de secondes jambes de réglage 88, qui sont parallèles au plan médian P, de façon à former deux couples de jambes 86 et 88 qui sont chacun constitués d'une jambe 86 et d'une jambe 88 et qui sont agencés de part et d'autre de la colonne de direction 18.

Les jambes 86 et 88 sont ici d'orientation sensiblement perpendiculaire entre elles, la première jambe 86 étant parallèle à l'axe longitudinal X-X.

Chaque jambe de réglage 86 et 88 comporte une première extrémité 90, 92 qui est montée pivotante autour d'un axe 94, 96 respectivement d'orientation transversale et appartenant à la structure 98 du véhicule.

Les secondes extrémités 100, 102 des jambes 86 et 88 sont juxtaposées et comportent des moyens de guidage 104 et 106 d'un élément de liaison 108 solidaire de la colonne de direction 12.

Les moyens guidages 104 et 106 consistent en des lumières oblongues d'orientation radiale par rapport à l'axe transversal de rotation de la première extrémité 90 et 92 respective. Ainsi, les lumières des moyens de guidage 104 sont, dans la première position de la colonne de direction 12 représentée à la figure 1, parallèles à l'axe longitudinal X-X. Les lumières des moyens de guidage 106 sont alors d'orientation sensiblement perpendiculaire à l'axe longitudinal X-X.

Les lumières sont traversées transversalement par des moyens de maintien constitués ici par un boulon 109 de l'élément de liaison 108.

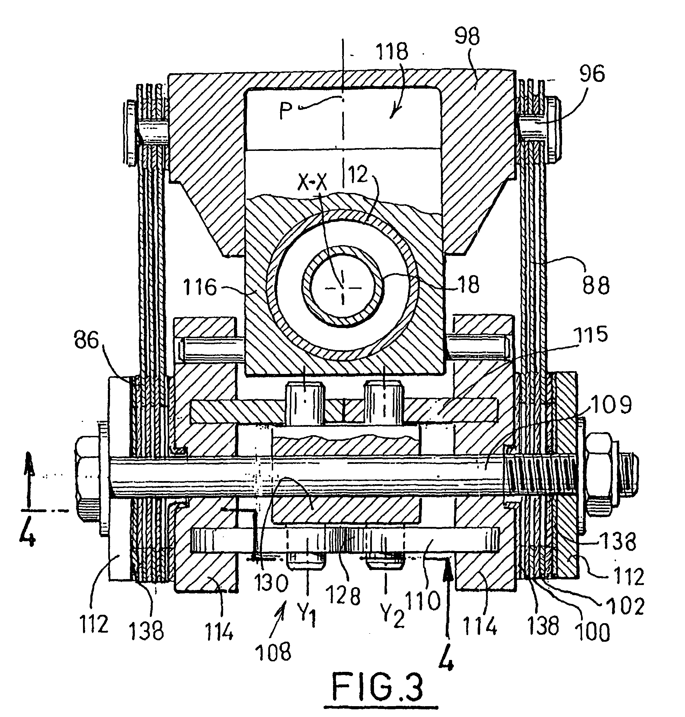

Conformément aux figures 3 à 7, chaque jambe 86 et 88 est constituée par la juxtaposition de trois flancs, qui consistent ici en des tôles découpées.

Les secondes extrémités des tôles constituant la première et la seconde jambe 86, 88 de chaque couple sont empilées de façon alternée. De plus, elles sont agencées entre des cames 110 et une butée 112.

Chaque came 110 comporte une première extrémité 128 d'articulation et une seconde extrémité 115 d'appui.

Ainsi, lorsque le dispositif 82 de verrouillage et de déverrouillage bloque le mouvement de la colonne de direction, les secondes extrémités 115 des cames 110 pincent les secondes extrémités des jambes 86 et 88 contre les butées 112.

De façon à augmenter la surface de contact entre les cames 110 et les secondes extrémités 115 des jambes 86 et 88, pour diminuer les concentrations de contraintes et éviter ainsi la déformation des secondes extrémités, un bloc de pression 114 est interposé entre les secondes extrémités libres 115 des cames 110 et les secondes extrémités des jambes 86 et 88. Le bloc de pression 114 fait partie de l'élément de liaison 108.

L'élément de liaison 108 comporte aussi un collier 116 qui enserre la colonne de direction 12. De plus le collier 116 est monté à translation à l'intérieur d'une rainure longitudinale 118 de la structure du véhicule. Ainsi, les efforts transversaux qui sont exercés sur le dispositif 82 de verrouillage et de déverrouillage sont repris par la liaison entre le collier 116 et la rainure longitudinale 118 de façon à éviter toute surcharge transversale des jambes 86 et 88 qui pourrait les déformer et bloquer le dispositif de réglage 80.

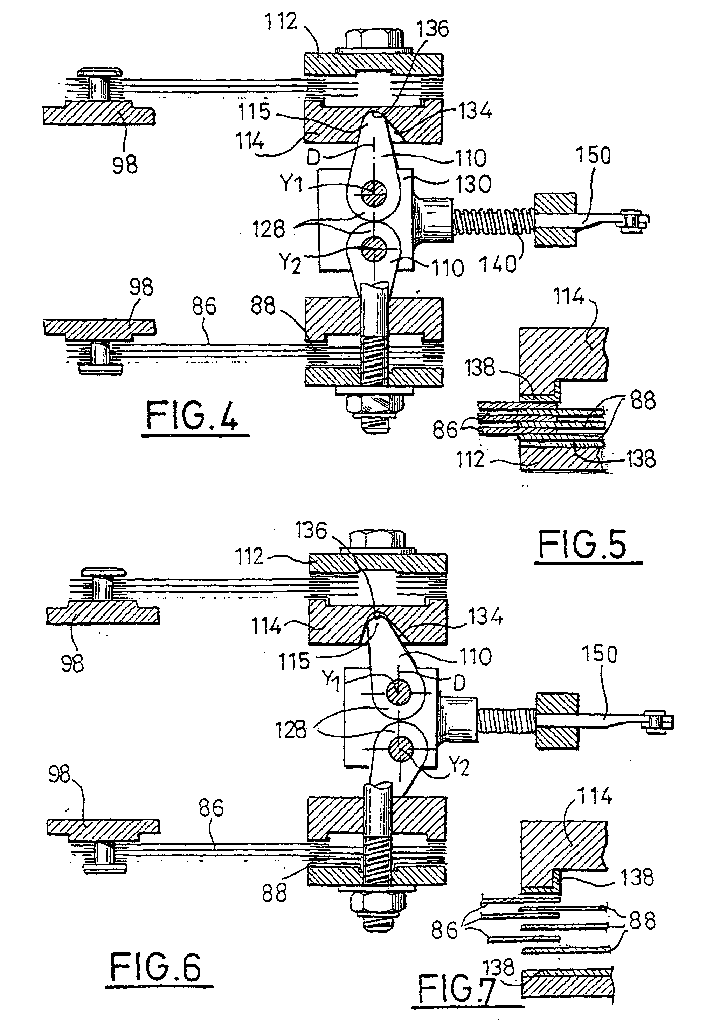

Les cames 110 sont ici au nombre de quatre, elles sont articulées en rotation, à proximité de leur première extrémité libre 128, par paires autour d'axes Y1 et Y2 qui sont solidaires d'un corps 130 qui est mobile en translation selon la direction longitudinale X-X. Les secondes extrémités libres 115 des cames 110 pénètrent à l'intérieur d'encoches 134 de section sensiblement triangulaire, représentées sur les figures 4 et 6. Les encoches 134 permettent un léger mouvement, globalement de rotation, des secondes extrémités libres 115 des cames 110.

Le corps 130 comporte une rainure 132 traversée par le boulon 109 et qui permet son guidage en translation.

Le fonctionnement du dispositif 82 de verrouillage et de déverrouillage est le suivant.

Conformément aux figures 1 et 3 à 5, le dispositif 82 de verrouillage et de déverrouillage permet le verrouillage, ou blocage, de la position de la colonne de direction 12. Le corps 130 est dans une position avant de verrouillage de façon que les fonds 136 des encoches 134 soient alignés avec une droite D passant par les axes Y1 et Y2 de rotation des cames 110 et représentée à la figure 4. Ainsi, les secondes extrémités libres 115 des cames 110 pressent les blocs de pression 114 vers l'extérieur du dispositif 82 en direction des butées 112, de façon à pincer les secondes extrémités 100 et 102 des tôles constituant les jambes 86 et 88 juxtaposées et alternées conformément à la figure 5.

Les efforts de frottement existant alors entre les surfaces latérales en contact des tôles constituant les jambes 86 et 88 bloquent le mouvement de rotation des jambes 86 et 88 autour de leur axe de rotation 94, 96 respectivement.

De façon à favoriser la transmission des efforts des cames 110 vers les blocs de pression 114 et à limiter la déformation des axes Y1 et Y2, la forme des premières extrémités libres 128 consiste en un arc de cercle dont le diamètre correspond à la moitié de la distance séparant les axes Y1 et Y2. Ainsi en position de verrouillage, les cames 110 s'arc-boutent deux à deux.

Avantageusement, les surfaces des butées 112 et des blocs de pression 114 en contact avec une surface latérale d'une tôle constituant une jambe 86 ou 88 sont recouvertes d'une couche de matériau 138 dont le coefficient de frottement est élevé pour augmenter les efforts assurant le verrouillage du dispositif 82.

De façon à maintenir le corps 130 dans la position avant de verrouillage, un ressort de rappel 140 exerce en permanence un effort orienté vers l'avant, le fond de la rainure 130 étant alors en appui contre le boulon 109.

Pour déverrouiller le dispositif 82, le corps 130 est ici tiré vers l'arrière au moyen d'une barre d'entraînement 150, conformément à la figure 6. La barre d'entraînement 150 est guidée en translation par une zone de guidage 148 de l'élément intermédiaire de maintien et de guidage 70.

Le ressort de rappel 140 est ici enroulé autour de la barre d'entraînement 150. Cela permet ainsi de le guider et d'éviter sa déformation transversale.

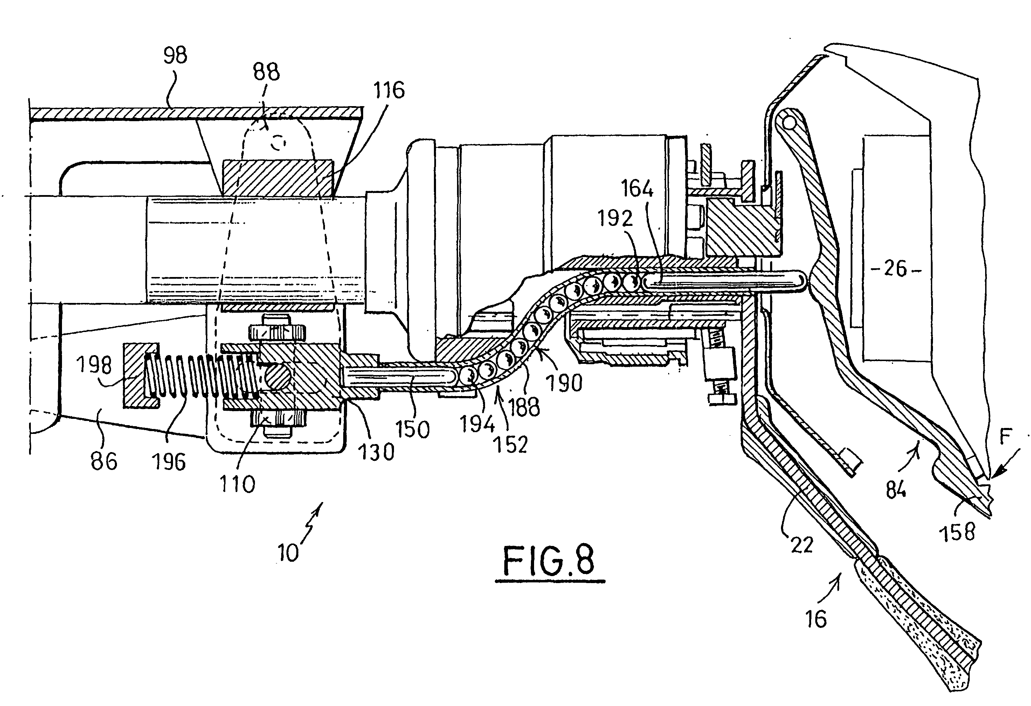

Le mouvement vers l'arrière du corps 130 provoque le déplacement des axes Y1 et Y2 de rotation des cames 110 et, par conséquent, un mouvement global de rotation de ces dernières. Leurs premières extrémités libres 136 se rapprochent l'une de l'autre de façon à relâcher la pression sur les blocs de pression 114. Les surfaces des secondes extrémités 100, 102 des tôles constituant les jambes 86 et 88 juxtaposées et alternées ne sont alors plus en contact conformément à la figure 7. Les jambes 86 et 88 ne sont plus immobilisées les unes par rapport aux autres, ce qui permet le déplacement de la colonne de direction 12.

Le réglage de la position du volant 16 provoque la rotation des jambes 86 et 88. La figure 2 représente le dispositif de direction 10 dans une deuxième position, le dispositif 82 de verrouillage et de déverrouillage étant en position de déverrouillage. On constate que le boulon 109 s'est déplacé par rapport aux moyens de guidage 104 et 106.

De façon à commander le verrouillage et le déverrouillage du dispositif 82, la barre d'entraînement 150 est reliée à un organe de commande 84, qui est ici un levier, par l'intermédiaire de moyens de translation 152.

Le levier 84 est monté articulé à l'une de ses extrémités libres 154 autour d'un axe d'articulation 156 d'orientation transversale, entre une position de verrouillage, représentée à la figure 1, et une position de déverrouillage, représentée à la figure 2.

Les moyens de translation 152 permettent de transformer le mouvement de rotation du levier 84 en un mouvement de translation puis de transmettre ce dernier au dispositif de verrouillage 82.

Les moyens de translation 152 sont ici constitués d'une tige 164 et d'un levier basculeur 166.

La tige 164 est montée en translation à l'intérieur d'une partie de l'élément intermédiaire de maintien et de guidage 70, son extrémité arrière 168 est en contact avec un tronçon intermédiaire 170 du levier 84, et son extrémité avant 180 permet d'entraîner en rotation une première extrémité 182 du levier basculeur 166.

Le levier basculeur 166 est articulé autour d'un axe de basculement 184 qui est ici situé à proximité d'une seconde extrémité 186 du levier basculeur 166 de façon à démultiplier l'effort exercé par la tige 164.

Le levier basculeur 166 permet aux moyens de translation 152 de traverser radialement la virole 28.

La seconde extrémité 186 est reliée à l'extrémité libre arrière de la barre d'entraînement 150 par le coulissement d'un pion 187 dans une lumière oblongue 189 d'orientation perpendiculaire à l'axe de la barre 150. Le levier basculeur 166 permet de transformer le mouvement de translation vers l'avant de la tige 164 en un mouvement de translation vers l'arrière de la barre d'entraînement 150 et inversement.

Par conséquent, l'effort F sur l'extrémité libre 158 du levier 84 provoque une translation vers l'avant de la tige 164, un basculement dans le sens antihoraire, en référence à la figure 1, du levier 84, ainsi qu'un mouvement vers l'arrière de la barre d'entraînement 150 qui comprime le ressort de rappel 140. Le corps 130 est ainsi entraîné vers sa position arrière de déverrouillage.

Le ressort de rappel 140 applique un effort d'entraînement selon un mouvement contraire à celui qui vient d'être décrit. Ainsi lorsque l'effort F est relâché à l'extrémité 158 du levier 84, le ressort 140 ramène le corps 130 et le levier 84 en position de verrouillage.

En position de verrouillage, telle que représentée à la figure 1, la seconde extrémité libre 158 du levier 84 est en appui contre une première butée 160 d'un coussin central 162 du bloc fixe 26.

Le coussin central 162 peut être le capot de protection d'un dispositif de sécurité, non représenté, tel qu'un coussin gonflable.

En position de déverrouillage, représentée à la figure 2, la seconde extrémité libre 158 du levier 84 est en appui contre une seconde butée 162 du bloc fixe 26.

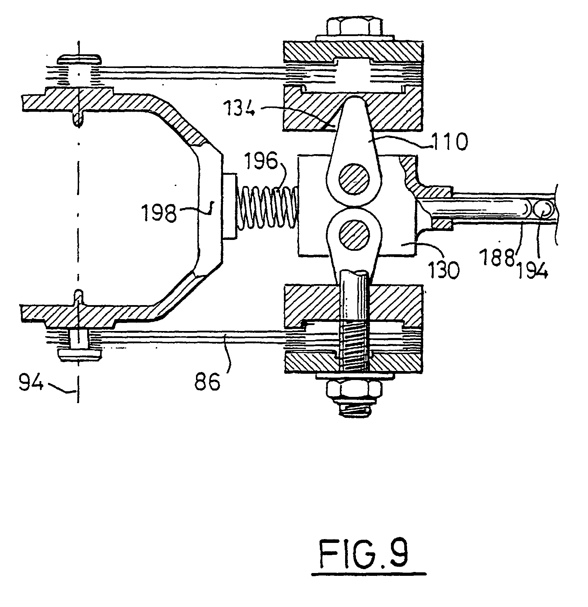

Selon une variante de réalisation, représentée aux figures 8 et 9, les moyens de translation 152 comportent un tube 188 dans lequel est agencée une série de billes 190 adjacentes de diamètre complémentaire au diamètre intérieur du tube 188 qui sont guidées en translation. Chaque bille d'extrémité 192 et 194 de la série est en contact avec la tige 164 et la barre 150 respectivement.

Le tube 188 permet aux moyens de translation 152 de traverser radialement la virole 28.

Selon cette variante, le mouvement du levier 84 entre sa position de verrouillage et sa position de déverrouillage provoque un mouvement vers l'avant du corps 130. De ce fait, un ressort 196 est interposé entre un étrier 198, articulé en rotation autour d'un axe qui est ici avantageusement l'axe d'articulation 94 de la première extrémité 90 des jambes 86, et le corps 130 de façon à le ramener dans une position arrière de verrouillage.

La forme des encoches 134 est modifiée pour prendre en compte l'inversion du sens du mouvement du corps 130 pour passer de sa position de verrouillage à sa position de déverrouillage et inversement.

Pour déverrouiller le dispositif de direction 10, l'utilisateur du véhicule, en restant dans sa position assise qui correspond à sa position de conduite, doit appliquer un simple effort F sur l'extrémité libre 158 du levier de commande 84. Il peut ensuite ajuster facilement la position du volant 16, puis relâcher l'effort F de façon que le ressort de rappel 140, 196 verrouille le dispositif de direction 10, ainsi que la position du volant 16.

L'opération de réglage de la position du volant est simple et rapide puisqu'elle ne nécessite aucun mouvement du buste du conducteur. De plus, le levier 84 est situé au centre du volant 16 dans le champ visuel du conducteur, ce qui permet de lui rappeler la possibilité de réglage.

Selon une autre variante non représentée, le dispositif de réglage peut être adapté de façon que le déverrouillage du dispositif résulte d'une traction de l'extrémité libre du levier orientée de l'avant vers l'arrière. Il est ainsi par exemple possible de remplacer le ressort de rappel, qui est un ressort de compression, par un ressort de traction. Il est alors nécessaire de modifier la forme des encoches de façon à permettre la rotation des cames pour permettre le déplacement des secondes extrémités libres et le verrouillage et le déverrouillage du dispositif de direction.

## Revendications

1. Dispositif de direction (10) de véhicule automobile du type comportant une colonne de direction (12) tubulaire longitudinale, un arbre de direction (18) monté tournant à l'intérieur de la colonne de direction (12), un volant de direction (16) lié en rotation à l'extrémité supérieure libre de l'arbre de direction (18), un bloc (26) monté au centre du volant (16) et fixe en rotation par rapport à la colonne de direction (12), par l'intermédiaire d'un support tubulaire ou virole (28) coaxial à l'arbre de direction (18), et du type comportant un dispositif (80) de réglage de la position de la colonne de direction (12), dans un plan vertical (P) de direction longitudinale, qui comporte un dispositif (82) de verrouillage et de déverrouillage de sa position qui est actionné par un organe de commande (84) monté mobile entre une position de verrouillage et une position de déverrouillage du dispositif (80) de réglage de la position de la colonne de direction (12), **caractérisé en ce que** l'organe de commande (84) est monté dans le bloc fixe (26).

2. Dispositif de direction (10) selon la revendication précédente, **caractérisé en ce que** l'organe de commande (84) est un levier qui est monté articulé à l'une de ses extrémités libres (154) autour d'un axe d'articulation (156), entre la position de verrouillage et la position de déverrouillage.

3. Dispositif de direction (10) selon la revendication précédente, **caractérisé en ce que** l'axe d'articulation (156) du levier est d'orientation sensiblement transversale.

4. Dispositif de direction (10) selon l'une quelconque des revendications précédentes, **caractérisé en ce que** des moyens de translation (152) sont interposés entre l'organe de commande (84) et le dispositif (82) de verrouillage et de déverrouillage de façon à transmettre le mouvement de l'organe de commande (84) au dispositif (82) de verrouillage et de déverrouillage.

5. Dispositif de direction (10) selon la revendication précédente, **caractérisé en ce que** les moyens de translation (152) traversent radialement le support tubulaire (28).

6. Dispositif de direction (10) selon la revendication l'une des revendications 4 ou 5, **caractérisé en ce que** les moyens de translation (152) comportent au moins un levier basculeur (166) qui est articulé autour d'un axe d'articulation (184) et dont chaque extrémité (182, 186) coopère avec l'organe de commande (84) et le dispositif (82) de verrouillage et de déverrouillage respectivement.

7. Dispositif de direction (10) selon la revendication précédente, **caractérisé en ce que** l'axe d'articulation (184) du levier basculeur (166) est d'orientation sensiblement transversale.

8. Dispositif de direction (10) selon l'une des revendications 4 ou 5, **caractérisé en ce que** les moyens de translation (152) comportent un tube (188) dans lequel est agencée une série de billes (190) adjacentes de diamètre complémentaire au diamètre intérieur du tube (188) qui sont guidées en translation, dans lequel chaque bille d'extrémité (192, 194) de la série coopère avec l'organe de commande (84) et le dispositif (82) de verrouillage et de déverrouillage respectivement.

9. Dispositif de direction (10) selon l'une quelconque des revendications précédentes, **caractérisé en ce que** le dispositif (82) de verrouillage et de déverrouillage comporte au moins une came (110) articulée à une première extrémité (128), entre une position de verrouillage, et une position de déverrouillage qui verrouille et déverrouille respectivement le dispositif (80) de réglage, et **en ce qu'**en position de verrouillage une seconde extrémité libre (115) de la came (110) appuie transversalement sur le dispositif (80) de réglage de façon à verrouiller sa position.

10. Dispositif de direction (10) selon la revendication précédente, **caractérisé en ce que** le dispositif (80) de réglage comporte au moins une première et une seconde jambe (86, 88) de réglage, sensiblement perpendiculaires entre elles, qui sont parallèles au plan médian (P) et dont chaque jambe (86, 88) comporte une première extrémité (90, 92) qui est montée pivotante autour d'un axe transversal (92, 94) différent, **en ce que** les secondes extrémités (100, 102) des jambes (86, 88) sont juxtaposées et comportent des moyens de guidage (104, 106) d'un élément de liaison (108) solidaire de la colonne de direction (12), et **en ce que** les deux secondes extrémités (100, 102) de chaque jambe (86, 88) sont pincées entre au moins une came (110) et une butée (112) lorsque le dispositif (82) de verrouillage et de déverrouillage est en position de verrouillage, de façon à immobiliser l'élément de liaison (108).

11. Dispositif de direction (10) selon la revendication précédente, **caractérisé en ce que** les moyens de guidage (104, 106) de chaque seconde extrémité libre (100, 102) comporte une boutonnière oblongue d'orientation radiale par rapport à l'axe transversal (94, 96) de rotation de la première extrémité (90, 92) respective, et **en ce que** l'élément de liaison (108) comporte une partie (109) qui est mobile en translation radiale dans chaque moyen de guidage (104, 106) lorsque le dispositif (82) de verrouillage et de déverrouillage est en position de déverrouillage.

12. Dispositif de direction (10) selon l'une des revendications 10 ou 11, **caractérisé en ce que** le dispositif (82) de verrouillage et de déverrouillage comporte deux paires de première et de deuxième cames (110) qui sont articulées autour d'un premier et d'un second axe (Y1, Y2) respectivement, de l'élément de liaison (108), parallèles entre eux, et qui sont d'orientation opposée, et **en ce qu'**au moins une paire de jambes de réglage (86, 88) est agencée de chaque côté du dispositif (82) de verrouillage et de déverrouillage de façon qu'en position de verrouillage, les secondes extrémités (115) des cames (110) de chaque paire de cames (110) et deux butés (112) pincent les secondes extrémités (100, 102) d'au moins deux jambes de réglage (86, 88) en vis-à-vis, de façon à immobiliser l'élément de liaison (108) et la colonne de direction (18).

## Claims

1. An automobile vehicle steering device (10) of the type comprising a longitudinal tubular steering column (12), a steering shaft (18) mounted to rotate within the steering column (12), a steering wheel (16) connected in a rotary manner to the free upper end of the steering shaft (18), a block (26) mounted in the centre of the steering wheel (16) and rotationally fixed with respect to the steering column (12), by means of a tubular support or collar (28) coaxial with respect to the steering shaft (18), and of the type comprising a device (80) for adjusting the position of the steering column (12), in a vertical plane (P) of longitudinal direction, which comprises a device (82) for locking and unlocking its position actuated by a control member (84) mounted to move between a locking position and an unlocking position of the device (80) for adjusting the position of the steering column (12), **characterised in that** the control member (84) is mounted in the fixed block (26).

2. A steering device (10) as claimed in the preceding claim, **characterised in that** the control member (84) is a lever which is mounted in an articulated manner at one of its free ends (154) about an axis of articulation (156) between the locking position and the unlocking position.

3. A steering device (10) as claimed in the preceding claim, **characterised in that** the axis of articulation (156) of the lever is oriented in a substantially transverse manner.

4. A steering device (10) as claimed in any one of the preceding claims, **characterised in that** translation means (152) are interposed between the control member (84) and the locking and unlocking device (82) in order to transmit the movement from the control member (84) to the locking and unlocking device (82).

5. A steering device (10) as claimed in the preceding claim, **characterised in that** the translation means (152) traverse the tubular support (28) in a radial manner.

6. A steering device (10) as claimed in one of claims 4 or 5, **characterised in that** the translation means (152) comprise at least one tilting lever (166) which is articulated about an axis of articulation (184) and each end (182, 186) of which cooperates with the control member (84) and the locking and unlocking device (82) respectively.

7. A steering device (10) as claimed in the preceding claim, **characterised in that** the axis of articulation (184) of the tilting lever (166) is oriented in a substantially transverse manner.

8. A steering device (10) as claimed in one of clams 4 or 5, **characterised in that** the translation means (152) comprise a tube (188) in which a series of adjacent balls (190) of a diameter complementary with the inner diameter of the tube (188) is arranged, these balls being guided in translation, in which each end ball (192, 194) of the series cooperates with the control member (84) and the locking and unlocking device (82) respectively.

9. A steering device (10) as claimed in any one of the preceding claims, **characterised in that** the locking and unlocking device (82) comprises at least one cam (110) articulated at a first end (128) between a locking position and an unlocking position which respectively locks and unlocks the adjustment device (80), and **in that**, in the locking position, a second free end (115) of the cam (110) bears transversely on the adjustment device (80) in order to lock its position.

10. A steering device (10) as claimed in the preceding claim, **characterised in that** the adjustment device (80) comprises at least a first and a second adjustment leg (86, 88) which are substantially perpendicular to one another and parallel to the median plane (P) and in which each leg (86, 88) comprises a first end (90, 92) which is mounted to pivot about a different transverse axis (92, 94), **in that** the second ends (100, 102) of the legs (86, 88) are juxtaposed and comprise guide means (104, 106) for a connection member (108) rigid with the steering column (12), and **in that** the two second ends (100, 102) of each leg (86, 88) are gripped between at least one cam (110) and one abutment (112) when the locking and unlocking device (82) is in the locking position, in order to immobilise the connection member (108).

11. A steering device (10) as claimed in the preceding claim, **characterised in that** the guide means (104, 106) of each second free end (100, 102) comprise an oblong opening oriented radially with respect to the transverse axis (94, 96) of rotation of the first respective end (90, 92), and **in that** the connection member (108) comprises a portion (109) which can be moved in radial translation in each guide means (104, 106) when the locking and unlocking device (82) is in the unlocking position.

12. A steering device (10) as claimed in one of claims 10 or 11, **characterised in that** the locking and unlocking device (82) comprises two pairs of first and second cams (110) which are articulated about a first and a second axis (Y1, Y2) respectively of the connection member (108), which are parallel to one another and of opposing orientation, and **in that** at least one pair of adjustment legs (86, 88) is arranged on each side of the locking and unlocking device (82) so that, in the locking position, the second ends (115) of the cams (110) of each pair of cams (110) and two abutments (112) grip the second ends (100, 102) of at least two facing adjustment legs (86, 88) so as to immobilise the connection member (108) and the steering column (18).

## Patentansprüche

1. Kraftfahrzeuglenkeinrichtung (10) von dem Typ, welcher eine longitudinale röhrenförmige Lenksäule (12) umfasst, eine Lenkspindel (18), welche drehend im Inneren der Lenksäule (12) befestigt ist, ein Lenkrad (16), welches in Rotation verbunden ist mit dem freien oberen Ende der Lenkspindel (18), einen Block (26), welcher in der Mitte des Lenkrads (16) befestigt ist und in Rotation fixiert ist im Verhältnis zur Lenksäule (12), vermittels eines röhrenförmigen Trägers oder Rings (28) koaxial zur Lenkspindel (18), und von dem Typ umfassend eine Einrichtung (80) der Einstellung der Position der Lenksäule (12), in einer vertikalen Ebene (P) von longitudinaler Richtung, welcher eine Einrichtung (82) zur Verriegelung und zur Entriegelung seiner Position umfasst, welche betätigt wird durch ein Steuerorgan (84), welches beweglich befestigt ist zwischen einer Position der Verriegelung und einer Position der Entriegelung der Einrichtung (80) zur Einstellung der Position der Lenksäule (12), **dadurch gekennzeichnet, dass** das Steuerorgan (84) in dem fixierten Block (86) befestigt ist.

2. Lenkeinrichtung (10) nach dem vorhergehenden Anspruch, **dadurch gekennzeichnet, dass** das Steuerorgan (84) ein Hebel ist, der an einem seiner freien Enden (154) gelenkig befestigt ist um eine Gelenkachse (156), zwischen der Position der Verriegelung und der Position der Entriegelung.

3. Lenkeinrichtung (10) nach dem vorhergehenden Anspruch, **dadurch gekennzeichnet, dass** die Gelenkachse (156) des Hebels von im Wesentlichen transversaler Ausrichtung ist.

4. Lenkeinrichtung (10) nach einem der vorhergehenden Ansprüche, **dadurch gekennzeichnet, dass** die Translationsmittel (152) angeordnet sind zwischen dem Steuerorgan (84) und der Einrichtung (82) zur Verriegelung und zur Entriegelung, um die Bewegung des Steuerorgans (84) an die Einrichtung (82) zur Verriegelung und zur Entriegelung zu übertragen.

5. Lenkeinrichtung (10) nach dem vorhergehenden Anspruch, **dadurch gekennzeichnet, dass** die Translationsmittel (152) radial den röhrenförmigen Träger (28) durchqueren.

6. Lenkeinrichtung (10) nach einem der Ansprüche 4 oder 5, **dadurch gekennzeichnet, dass** die Translationsmittel (152) mindestens einen Kipphebel (166) umfassen, welcher gelenkig um eine Gelenkachse (184) befestigt ist, und von dem jedes Ende (182, 186) mit dem Steuerorgan (84) bzw. der Einrichtung zur Verriegelung und zur Entriegelung zusammenwirkt.

7. Lenkeinrichtung (10) nach dem vorhergehenden Anspruch, **dadurch gekennzeichnet, dass** die Gelenkachse (184) des Kipphebels (166) von im Wesentlichen transversaler Ausrichtung ist.

8. Lenkeinrichtung (10) nach einem der Ansprüche 4 oder 5, **dadurch gekennzeichnet, dass** die Translationsmittel (152) ein Rohr (188) umfassen, in welchem eine Reihe von nebeneinander gelegenen Kugeln (190) angeordnet ist, von einem Durchmesser komplementär zum Innendurchmesser des Rohrs (188), welche in Translation geführt sind, in welchem jede Endkugel (192, 194) der Reihe mit dem Steuerorgan (84) bzw. der Einrichtung (82) zur Verriegelung und zur Entriegelung zusammenwirkt.

9. Lenkeinrichtung (10) nach einem der vorhergehenden Ansprüche, **dadurch gekennzeichnet, dass** die Einrichtung (82) zur Verriegelung und zur Entriegelung wenigstens eine Nocke (110) umfasst, welche an einem ersten Ende (128) gelenkig befestigt ist zwischen einer Position der Verrieglung und einer Position der Entriegelung, welche jeweils die Einrichtung (80) zur Einstellung verriegelt und entriegelt, und dadurch, dass in Position der Verriegelung ein zweites freies Ende (115) der Nocke (110) transversal in Auflage auf die Einrichtung (80) zum Einstellen ist, um seine Position zu verriegeln.

10. Lenkeinrichtung (10) nach dem vorhergehenden Anspruch, **dadurch gekennzeichnet, dass** die Einrichtung (80) zum Einstellen wenigstens einen ersten und einen zweiten Arm (86, 88) zum Einstellen umfasst, im Wesentlichen zueinander senkrecht, welche parallel zur mittleren Ebene (P) sind und von denen jeder Arm (86, 88) ein erstes Ende (90, 92) umfasst, welches drehend befestigt um eine unterschiedliche transversale Achse (92, 94) ist, und dadurch, dass die zweiten Enden (100, 102) der Arme (86, 88) aneinander gelegen sind und Führungsmittel (104, 106) umfassen eines Verbindungselementes (108) aus einem Stück mit der Lenksäule (12), und dadurch, dass die zweiten Enden (100, 102) jedes Arms (86, 88) zwischen wenigstens einer Nocke (110) und einem Anschlag (112) geklemmt sind, wenn die Einrichtung (82) zur Verriegelung und zur Entriegelung in Position der Verriegelung ist, um das Verbindungselement (108) zu immobilisieren.

11. Lenkeinrichtung (10) nach dein vorhergehenden Anspruch, **dadurch gekennzeichnet, dass** die Führungsmittel (104, 106) jedes zweiten freien Endes (100, 102) eine längliche Aussparung umfassen von radialer Ausrichtung im Verhältnis zur transversalen Achse (94, 96) der Rotation des jeweiligen ersten Endes (90, 92), und dadurch, dass das Verbindungselement (108) einen Bereich (109) umfasst, welcher beweglich in radialer Translation ist in jedem Führungsmittel (104, 106), wenn die Einrichtung (82) zur Verriegelung und zur Entriegelung in Position der Entriegelung ist.

12. Lenkeinrichtung (10) nach einem der Ansprüche 10 oder 11, **dadurch gekennzeichnet, dass** die Einrichtung (82) zur Verriegelung und zur Entriegelung zwei Paare von ersten und von zweiten Nocken (110) umfasst, die gelenkig befestigt sind jeweils um eine erste und eine zweite Achse (Y1, Y2), des Verbindungselementes (108), zueinander parallel, und welche von gegensätzlicher Ausrichtung sind, und dadurch, dass wenigstens ein Paar von Einstellarmen (86, 88) an jeder Seite der Einrichtung (82) zur Verrieglung und zur Entriegelung angeordnet ist, derart, dass in Position der Verriegelung die zweiten Enden (115) der Nocken (110) von jedem Paar der Nocken (110) und zwei Anschlägen (112) die zweiten Enden (100, 102) von wenigstens zwei Einstellarmen (86, 88) gegenüberliegend klemmen, um das Verbindungselement (108) und die Lenksäule (18) zu immobilisieren.
